**Europäisches Patentamt**

**European Patent Office**

**Office européen des brevets**

(11) Veröffentlichungsnummer: **0 086 248**
**A1**

# (12) EUROPÄISCHE PATENTANMELDUNG

(21) Anmeldenummer: **82101150.9**

(22) Anmeldetag: **17.02.82**

(51) Int. Cl.³: **C 04 B 31/26, C 04 B 31/44**

(43) Veröffentlichungstag der Anmeldung: **24.08.83**
**Patentblatt 83/34**

(84) Benannte Vertragsstaaten: **AT BE CH DE FR GB IT LI LU NL SE**

(71) Anmelder: **Wüstefeld, Bernd, Dr.,**
**Heinrich-Hertz-Strasse 43, D-2000 Hamburg 76 (DE)**
Anmelder: **Wüstefeld, Aloys, Dr., Panoramaweg 17,**
**D-7035 Waldenbuch (DE)**
Anmelder: **Wüstefeld, Claus, Panoramaweg 17,**
**D-7035 Waldenbuch (DE)**

(72) Erfinder: **Wüstefeld, Bernd, Dr.,**
**Heinrich-Hertz-Strasse 43, D-2000 Hamburg 76 (DE)**
Erfinder: **Wüstefeld, Aloys, Dr., Panoramaweg 17,**
**D-7035 Waldenbuch (DE)**
Erfinder: **Wüstefeld, Claus, Panoramaweg 17,**
**D-7035 Waldenbuch (DE)**

(74) Vertreter: **Patentanwälte Kohler - Schwindling - Späth,**
**Hohentwielstrasse 41, D-7000 Stuttgart 1 (DE)**

(54) **Feinkörniges geblähtes Granulat und Verfahren zu dessen Herstellung.**

(57) Perlit mit einer Korngröße von vorzugsweise 0,1 bis 0,6 mm wird mit einem Glasurmittel vermischt, das vor Erreichen der Blähtemperatur des Perlits auf den einzelnen Perlit-Teilchen einen Film einer glasigen Schmelze bildet. Werden dann die Teilchen unter ständiger Bewegung bis auf die Blähtemperatur des Perlits erhitzt, entsteht ein Granulat mit einer Korngröße von weniger als 3 mm und einer Festigkeit der Granulat-Teilchen, die der Festigkeit von Sand entspricht. Dieses Granulat kann insbesondere als vorzugsweise alleiniger Zuschlagstoff für Putzmörtel verwendet werden, mit dem sich dann Dämmputze mit sehr hohem Dämmwert herstellen lassen. Als Glasurmittel wird vorzugsweise eine Suspension von kolloidalem Perlit in einer konzentrierten Lösung von Phosphaten oder von Silikaten und Boraten in Wasser oder aber allein eine wässrige Lösung saurer Metallphosphate verwendet. Das kolloidale Perlit entsteht ohne weiteres aus in herkömmlicher Weise geblähtem Perlit.

0086248

**Anmelder:**
Dr. Bernd Wüstefeld
Heinricht-Hertz-Str. 43
2000 Hamburg 76

Dr. Aloys Wüstefeld
Panoramaweg 17
7035 Waldenbuch

Claus Wüstefeld
Panoramaweg 17
7035 Waldenbuch

Stuttgart, den 16.2.1982
P 3993 EP   S/Pi

**Vertreter:**
Kohler-Schwindling-Späth
Patentanwälte
Hohentwielstr. 41
7000 Stuttgart 1

### Feinkörniges geblähtes Granulat und Verfahren zu dessen Herstellung

Die Erfindung betrifft ein feinkörniges Granulat aus einem geblähten mineralischen Werkstoff, insbesondere als Zuschlagstoff für Putzmörtel.

./.

2

Insbesondere zu Zwecken der Wärmedämmung werden geschäumte oder geblähte Werkstoffe verschiedenster Art in zunehmendem Umfang eingesetzt, da der Wärmedämmung eine zunehmende Bedeutung zukommt, insbesondere in der Bauindustrie. Die bisher bekannten Isoliermaterialien erfordern die Ausbildung oder Anbringung besonderer Dämmschichten, die wegen ihrer mangelnden mechanischen Stabilität und Wetterfestigkeit keine anderen Funktionen übernehmen können. Es sind zwar Versuche gemacht worden, wärmedämmende Putze zu entwickeln, die sowohl die Schutzfunktion eines normalen Putzes als auch die Rolle einer Wärmedämmschicht übernehmen können, jedoch ist die mit einem solchen Dämmputz erzielbare Wärmedämmung noch sehr gering. Dies liegt daran, daß die bisher zur Verfügung stehenden Zuschlagstoffe, welche die hohen Dämmwerte ersetzen sollen, entweder selbst keine sehr hohen Dämmwerte besitzen, wie beispielsweise Ziegelsplitt,oder aber,wie beispielsweise Granulate aus geschäumten Kunststoffen, keine ausreichende Festigkeit haben, um in so großen Mengen eingesetzt werden zu können, wie es für eine gute Wärmedämmung erforderlich wäre.

Es stehen zwar grundsätzlich geblähte mineralische Werkstoffe mit hoher Festigkeit und geringem Wärmeleitvermögen zur Verfügung, wie beispielsweise Blähton oder auch Schaumglas-Granulate, jedoch haben solche Granulate eine Korngröße von mehr als 5 mm und sind daher als Zuschlagstoffe zu Putzmörtel ungeeignet, da so grobe Zuschlagstoffe das

./.

Aufbringen einwandfreier Putzschichten nicht mehr zulassen. Hervorragende, wärmedämmende Eigenschaften hätte geblähtes Perlit, jedoch hat geblähtes Perlit keine nennenswerte mechanische Festigkeit, sondern zerfällt in kolloidalen Staub. Daraus läßt sich zwar ein grundsätzlich als Dämmstoff geeignetes Granulat bilden, jedoch hat ein solches Granulat eine Korngröße im Bereich von 10 mm, so daß es wiederum als Zuschlag zu Putzmörtel völlig ungeeignet ist.

Der Erfindung liegt demnach die Aufgabe zugrunde, ein Granulat aus einem geblähten mineralischen Werkstoff zu schaffen, das sowohl so feinkörnig ist als auch eine solche mechanische Festigkeit aufweist, daß es als Zuschlagstoff für Putzmörtel geeignet ist und dem Putzmörtel in solchen Mengen zugegeben werden kann, daß sich dadurch Putzschichten mit hohen Dämmwerten erstellen lassen.

Diese Aufgabe wird nach der Erfindung durch ein Granulat gelöst, das aus geblähtem Perlit besteht, dessen Teilchen mit einer Glasur versehen sind.

Wie bereits oben erwähnt, ist Perlit ein blähfähiges Material. Das Aufblähen findet durch Verdampfen des im Perlit gebundenen Wassers statt. Das Verdampfen und Aufblähen tritt bei Temperaturen unter 1000° C statt, während das Perlit selbst erst bei Temperaturen über 1200° C schmilzt. Infolgedessen wird beim Aufblähen die Struktur des Perlits

./.

zerstört, so daß das Perlit durch das Aufblähen seine
mechanische Festigkeit verliert. Bei dem erfindungsgemäßen Granulat wird jedoch den aufgeblähten Perlit-
Teilchen durch die Glasur eine hohe mechanische Festigkeit erteilt, weil die Glasur schon vor Erreichen der
Blähtemperatur schmilzt und daher beim Aufblähen der
Perlit-Teilchen in ihrer Struktur nicht zerstört werden
kann. Vielmehr werden durch die beim Abkühlen erhärtete
Glasur die Perlit-Teilchen fest gebunden, so daß Teilchen
entstehen, deren Festigkeit derjenigen von Sand vergleichbar ist. Auch lassen sich aus entsprechend feinem Perlit
Teilchen herstellen, die eine mit Sand vergleichbare Korngröße haben. Dieses Granulat läßt sich wegen seiner hohen
Festigkeit wie Sand in Mörtel verwenden und in großen
Mengen den hydraulischen Bindemitteln beifügen, so daß
aus dem erfindungsgemäßen Granulat ein Putz herstellbar
ist, der sehr hohe Dämmwerte aufweist und in vielen Fällen die Verwendung gesonderter Schichten zur Wärmeisolierung entbehrlich macht.

Grundsätzlich können die Teilchen des erfindungsgemäßen
Granulats mit Glasuren beliebiger Art versehen sein, sofern nur gewährleistet ist, daß die die Glasur bildenden
Werkstoffe bei einer Temperatur schmelzen, die niedriger
liegt als die Blähtemperatur des Perlit, damit das Glasur-Material beim Aufblähen nicht ähnliche Zerstörungen
erfährt wie das Perlit selbst. Bei einer bevorzugten

./.

Ausführungsform des erfindungsgemäßen Granulats besteht die Glasur aus dem Reaktionsprodukt einer Suspension von magmatischen Gesteinen oder Mineralien mit einer Korngröße von weniger als 0,1 mm in einer konzentrierten Lösung von Phosphaten oder von Silikaten und Boraten in Wasser. Eine solche Glasur ist in der DE-OS 23 56 524 beschrieben. Der besondere Vorteil der Anwendung einer solchen Glasur liegt in den sehr geringen Kosten für die Ausgangsmaterialien, die zur Herstellung der Glasur benötigt werden, und darin, daß keine besonderen Schritte zur Herstellung des Glasur-Materials benötigt werden. Ein weiterer Vorteil der Glasur besteht darin, daß in weiterer Ausgestaltung der Erfindung in der zu ihrer Herstellung dienenden Suspension als magmatisches Mineral Perlit verwendet werden kann, so daß die Glasur die gleichen Grundbestandteile enthält wie die Teilchen des Granulates selbst, wodurch eine besonders innige Verbindung gewährleistet ist und außerdem Grundkörper und Glasur im wesentlichen die gleichen physikalischen Eigenschaften haben, insbesondere eine weitgehende Übereinstimmung der Wärmeausdehnungskoeffizienten, was für die Beständigkeit und Rissefreiheit der Glasur und damit der Festigkeit der Granulat-Teilchen von besonderer Bedeutung ist.

Eine weitere, sehr kostengünstige und sehr einfach herstellbare Glasur besteht in dem Produkt der Entwässerung saurer Metallphosphate.

Die Erfindung hat auch ein Verfahren zur Herstellung eines solchen Granulats zum Gegenstand. Das erfindungsgemäße Verfahren besteht darin, daß das körnige Perlit mit einem

./.

Glasurmittel vermischt wird, das vor Erreichen der Blähtemperatur des Perlits auf den einzelnen Perlit-Teilchen
einen Film einer glasigen Schmelze bildet, und dann die
Teilchen unter ständiger Bewegung bis auf die Blähtemperatur des Perlits erhitzt werden.

Wie bereits oben erwähnt, wird der von dem Glasurmittel
gebildete Film beim Aufblähen der Teilchen nicht zerstört,
so daß er nach dem Erkalten der Granulat-Teilchen deren
Bestandteile fest bindet und dadurch den Teilchen die gewünschte, hohe Festigkeit verleiht.

Um die Filmbildung zu gewährleisten, ist es besonders vorteilhaft, als Glasurmittel eine Suspension eine Glasur
bildender Teilchen zu verwenden und in einer solchen Menge
mit dem Perlit zu vermischen, daß die einzelnen Perlit-
Teilchen mit einem Film der Suspension beschichtet sind,
bevor die Erhitzung auf die Blähtemperatur des Perlits
erfolgt. Durch Aufschlämmen der eine Glasur bildenden Teilchen in Form einer Suspension und Vermischen der Suspension
mit den Perlit-Teilchen wird gewährleistet, daß das Glasurmittel die Oberflächen der Perlit-Teilchen gleichmäßig
bedeckt und nach dem Schmelzen einen gleichmäßigen Glasurfilm bildet.

Bei einer bevorzugten Ausführungsform des erfindungsgemäßen
Verfahrens wird als Glasurmittel eine Suspension von magmatischen Gesteinen oder Mineralien in einer konzentrierten Lösung von Phosphaten oder von Silikaten und Boraten

./.

in Wasser verwendet. Eine solche Suspension läßt sich auf
einfache Weise herstellen. Dabei können Ausgangsstoffe verwendet werden, die reichlich zu geringen Kosten zur Verfügung stehen. Dies ist für die Herstellung eines Zuschlagmittels für Putzmörtel von erheblicher Bedeutung, weil
solche Zuschlagstoffe selbst keine großen Kosten verursachen dürfen.

Bei einer bevorzugten Ausführungsform der Erfindung wird
eine Suspension verwendet, die als suspendierte Teilchen
feinkörniges Perlit enthält. Während andere Mineralien
mechanisch zerkleinert werden müssen, um die zum Aufschlämmen in einer Suspension erforderliche Feinheit zu
haben, läßt sich in weiterer Ausgestaltung des erfindungsgemäßen Verfahrens das in der Suspension verwendete Perlit
durch Zerreiben von geblähtem Perlit herstellen. Da geblähtes Perlit schon bei geringster mechanischer Belastung
zu Staub zerfällt, dessen Teilchen eine kolloidale Größe
haben, ist dieses Perlit für die Suspension hervorragend
geeignet und sehr leicht herstellbar.

Eine andere, sehr vorteilhafte Ausführungsform des erfindungsgemäßen Verfahrens besteht darin, daß als Glasurmittel allein eine wässrige Lösung saurer Metallphosphate
verwendet wird. Dabei kann es sich sowohl um Lösungen der
Phosphate zweiwertiger als auch dreiwertiger Ionen handeln. Besonders zu nennen sind die Phosphate der zweiwertigen Ionen von Mg, Mn, Fe, Co, Ni, Cu und Zn sowie von
Ca, Sr, Ba und Pb und die Phosphate der dreiwertigen Ionen von Al, Fe und Cr. Dabei ist es möglich, ein als
Glasurmittel geeignetes saures Manganphosphat durch Umsetzen von Mangancarbonat, das in Form von Magnesit in

./.

großen Mengen billig zur Verfügung steht, herzustellen.
Zum Erzeugen der Glasur genügt es, das Rohperlit mit
einer solchen Phosphatlösung anzufeuchten, zum Zweck der
Entwässerung zu trocknen und anschließend zu blähen. Die
Ausbildung einer Glasur findet aus den entwässerten Phosphaten vor Erreichen der Blähtemperatur statt.

Bei Verwendung einer sauren Metallphosphatlösung als
Glasurmittel können dieser Lösung noch gemahlene Glasfritten und/oder Glaspulver zugesetzt werden, wenn besonders feste Überzüge oder Überzüge bestimmter Farbe
oder Struktur erzielt werden sollen.

Um ein geblähtes Granulat mit der gewünschten kleinen
Körnung zu erhalten, wird zweckmäßig zur Herstellung
des Granulats Perlit mit einer Korngröße von weniger als
1 mm eingesetzt. Besonders geeignet ist handelsübliches
Perlit mit der Kornfraktion von 0,1 bis 0,6 mm. Weiterhin ist es zweckmäßig, auf 1 kg Perlit 0,1 bis 0,2 l
Suspension bzw. Phosphatlösung einzusetzen, um eine einwandfreie Beschichtung der einzelnen Teilchen mit der
Glasur zu gewährleisten und demgemäß Teile hoher Festigkeit zu erhalten, ohne daß die eingesetzte Menge des
Glasurmittels unnötig groß ist.

Wie oben erwähnt, ist das erfindungsgemäße Granulat insbesondere als Zuschlagstoff für Mörtel, und zwar insbesondere für Putzmörtel zur Herstellung von Dämmputzen,
geeignet. Demgemäß ist Gegenstand der Erfindung auch
die Verwendung des erfindungsgemäßen Granulats zu diesem Zweck.

./.

Wie oben erwähnt, ist ein zur Herstellung des erfindungsgemäßen Granulats besonders geeignetes Glasurmittel eine Suspension, die in der DE-OS 23 56 524 zur Herstellung von Bindemitteln und Überzügen auf körnigem Gesteinsmaterial beschrieben ist. Die in der DE-OS 23 56 524 beschriebenen Einzelheiten über die Herstellung und Anwendung dieses Glasurmittels werden hiermit zum Inhalt der Beschreibung des erfindungsgemäßen Granulats und des Verfahrens zu dessen Herstellung gemacht.

Anschließend wird die Herstellung des erfindungsgemäßen Granulats noch anhand besonderer Ausführungsbeispiele näher beschrieben und erläutert.

### Beispiel 1

Es wurde zunächst eine Lösung aus 10 Gew.T. $NA_2SiO_3 \cdot 5 H_2O$ und 3,6 Gew.T. $H_3BO_3$ in 10 Gew.T. Wasser hergestellt, indem zunächst das Natriummetasilikat in das Wasser eingerührt und dann unter Zugabe der Borsäure gänzlich zur Lösung gebracht wurde. Diese Lösung wurde im Gewichtsverhältnis 1 : 1 mit geblähtem Perlit vermischt, das beim Mischen in kolloidales Perlit zerfiel, so daß eine Suspension des Perlits in der genannten Lösung entstand.

Rohperlit mit einer Korngröße von 0,1 bis 0,6 mm wurde mit der Suspension im Verhältnis 1 kg Perlit zu 100 cm$^3$ Suspension vermischt. Hierbei entstand ein leicht angefeuchtetes Produkt, bei dem die einzelnen Teilchen des Rohperlit mit einem Film der Suspension überzogen waren. Diese Mischung wurde in einem Drehrohrofen langsam bis auf etwa 1000°C erwärmt. Dabei entstand zunächst aus der Suspension ein trockener, fester Überzug, der bei

./.

etwa 800$^o$C, also noch vor Erreichen der Blähtemperatur des Perlits, in einen Film einer glasigen Schmelze
überging. Nach dem Aufblähen der Perlit-Teilchen wurde
das erhaltene Granulat abgekühlt, während die Bewegung
bis zum Erstarren der Schmelze fortgesetzt wurde.

Es wurde auf diese Weise ein Granulat mit sandähnlichem
Charakter und einer Korngröße von maximal 3 mm erhalten.
Die einzelnen Teilchen hatten auch eine Festigkeit, die
der Festigkeit von Sandkörnern vergleichbar war. Das
Schüttgewicht des Granulats betrug etwa 0,2 g/cm$^3$.

Das erhaltene Granulat läßt sich wegen der sehr hohen
Festigkeit seiner Teilchen als ausschließlicher Zuschlagstoff in Mörteln benutzen, die auch wegen der geringen
Korngröße als Putzmörtel geeignet sind. Damit hergestellte
Putzschichten lassen sich wegen der geringen Dichte des
Granulats mit großen Schichtdicken aufbringen und haben
wegen des hohen Gehaltes an dem geblähten und daher
schlecht wärmeleitenden Material einen sehr hohen Dämmwert.

Versuche mit größeren Mengen der Suspension haben keine
erkennbare Verbesserung der Eigenschaften des erfindungsgemäßen Granulats erbracht, jedoch wird die einzusetzende
Menge des Glasurmittels in erheblichem Maß von dessen
Art abhängen.

./.

Beispiel 2

Es wurden 2,8 g $MgHPO_4$ . 3 $H_2O$ in einer 2,5 g $H_3PO_4$ enthaltenden, wässrigen Lösung von Phosphorsäure gelöst.
Die dabei verwendete Wassermenge (etwa 10 bis 20 ml)
wurde so gewählt, daß die erhaltene Lösung ausreichte,
um 100 g Rohperlit damit anzufeuchten. Das angefeuchtete
Produkt wurde in der im Beispiel 1 angegebenen Weise
weiterbehandelt und lieferte ein Produkt mit im wesentlichen gleichen Eigenschaften.

Beispiel 3

Es wurde Beispiel 2 unter Verwendung einer sauren Metallphosphatlösung wiederholt, die aus 5 g 80%-iger $H_3PO_4$,
der zwei- bis vierfachen Menge Wasser und 2,75 g $MnCO_3$
hergestellt worden war. Auch hier wurde ein Produkt erhalten, das dem nach Beispiel 1 erhaltenen Produkt vergleichbar war.

Patentansprüche

1. Feinkörniges Granulat aus einem geblähten mineralischen Werkstoff, insbesondere als Zuschlagstoff für Putzmörtel, dadurch gekennzeichnet, daß es aus geblähtem Perlit besteht, dessen Teilchen mit einer Glasur versehen sind.

2. Granulat nach Anspruch 1, dadurch gekennzeichnet, daß die Glasur das Reaktionsprodukt einer Suspension von magmatischen Gesteinen oder Mineralien mit einer Korngröße von weniger als 0,1 mm in einer konzentrierten Lösung von Phosphaten oder von Silikaten und Boraten in Wasser besteht.

3. Granulat nach Anspruch 2, dadurch gekennzeichnet, daß die Suspension als magmatisches Mineral Perlit enthält.

4. Granulat nach Anspruch 1, dadurch gekennzeichnet, daß die Glasur das Produkt der Entwässerung saurer Metallphosphate ist.

./.

5. Verfahren zur Herstellung eines Granulats nach
einem der vorhergehenden Ansprüche, dadurch gekennzeichnet, daß das körnige Perlit mit einem
Glasurmittel vermischt wird, das vor Erreichen der
Blähtemperatur des Perlits auf den einzelnen Perlit-
Teilchen einen Film einer glasigen Schmelze bildet,
und dann die Teilchen unter ständiger Bewegung bis
auf die Blähtemperatur des Perlits erhitzt werden.

6. Verfahren nach Anspruch 5, dadurch gekennzeichnet,
daß als Glasurmittel eine Suspension eine Glasur
bildender Teilchen verwendet und in einer solchen
Menge mit dem Perlit vermischt wird, daß die einzelnen Perlit-Teilchen mit einem Film der Suspension beschichtet sind, bevor die Erhitzung auf die
Blähtemperatur der Perlits erfolgt.

7. Verfahren nach Anspruch 6, dadurch gekennzeichnet,
daß als Glasurmittel eine Suspension von magmatischen Gesteinen oder Mineralien in einer konzentrierten Lösung von Phosphaten oder von Silikaten
und Boraten in Wasser verwendet wird.

8. Verfahren nach Anspruch 7, dadurch gekennzeichnet,
daß die verwendete Suspension als suspendierte
Teilchen feinkörniges Perlit enthält.

9. Verfahren nach Anspruch 8, dadurch gekennzeichnet,
daß in der Suspension durch Zerreiben von geblähtem Perlit gewonnenes, kolloidales Perlit verwendet wird.

0086248

10. Verfahren nach Anspruch 5, dadurch gekennzeichnet, daß als Glasurmittel eine wässrige Lösung saurer Metallphosphate verwendet wird.

11. Verfahren nach Anspruch 10, dadurch gekennzeichnet, daß der Metallphosphatlösung Glasfritten und/oder Glaspulver zugesetzt werden.

12. Verfahren nach einem der Ansprüche 5 bis 11, dadurch gekennzeichnet, daß Perlit mit einer Korngröße von weniger als 1 mm, vorzugsweise im Bereich von 0,1 bis 0,6 mm, eingesetzt wird.

13. Verfahren nach einem der Ansprüche 6 bis 12, dadurch gekennzeichnet, daß auf 1 kg Perlit 0,1 bis 0,2 l Suspension bzw. Metallphosphatlösung eingesetzt werden.

14. Verwendung des Granulats nach einem der Ansprüche 1 bis 4 als Zuschlagstoff für Mörtel, insbesondere für Putzmörtel zur Herstellung von Dämmputzen.

Europäisches
Patentamt

**EUROPÄISCHER RECHERCHENBERICHT**

0086248

Nummer der Anmeldung

EP 82 10 1150.9

| Kategorie | Kennzeichnung des Dokuments mit Angabe, soweit erforderlich, der maßgeblichen Teile | betrifft Anspruch |
|---|---|---|
| | DE - A1 - 2 909 652 (P.O. GLIENKE) | |
| X | * Ansprüche 1 bis 3, 6, 7, 11, 15 * | 1,3, 5-7 |
| Y | * Ansprüche 1 bis 3, 7 bis 11 * | 2 |
| | -- | |
| | GB - A - 2 080 282 (J. MANVILLE CORP.) | |
| Y | * Ansprüche 1 bis 4 *. | 2 |
| A | * Ansprüche 1 bis 8, 14 bis 18; Zusammenfassung * | 1,3, 5-8, 12,14 |
| | -- | |
| A | US - A - 4 288 253 (J.M. VENABLE) | 1,3,7 |
| | * Ansprüche 1, 3, 4 * | |
| | -- | |
| A | US - A - 4 175 158 (E. SAUNDERS) | 1-3, |
| | * Ansprüche 1 bis 3, 9, 11 bis 14 * | 5-7, 12 |
| | -- | |
| D,A | DE - A1 - 2 356 524 (C. WÜSTEFELD) | 1,2, |
| | * Ansprüche 1, 2, 5 bis 11, 13, 15, 16 * | 4,7, 10 |
| | ---- | |

**EINSCHLÄGIGE DOKUMENTE**

**KLASSIFIKATION DER ANMELDUNG (Int. Cl.³)**

C 04 B 31/26
C 04 B 31/44

**RECHERCHIERTE SACHGEBIETE (Int. Cl.³)**

C 03 C 9/00
C 04 B 19/00
C 04 B 21/08
C 04 B 31/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 16-09-1982 | STROUD |

EPA form 1503.1 06.78